# EUROPÄISCHE PATENTSCHRIFT

(11) **EP 0 898 869 B1**
(45) Veröffentlichungstag und Bekanntmachung des Hinweises auf die Patenterteilung: **27.11.2002**
(21) Anmeldenummer: 98111523.1
(22) Anmeldetag: 23.06.1998
(51) Int. Cl.: A01D 27/00, A01D 33/14

(54) **Rübenerntemaschine**
Beet harvester
Recolteuse de betteraves

(30) Priorität: 01.09.1997 DE 19738170
(43) Veröffentlichungstag der Anmeldung: 03.03.1999
(73) Patentinhaber: CLAAS Selbstfahrende Erntemaschinen GmbH, 33428 Harsewinkel (DE)
(72) Erfinder: Kleinemenke, Heinrich, 33428 Harsewinkel (DE)

(56) Entgegenhaltungen:
- FR-A- 1 578 088
- FR-A- 2 670 075

## Beschreibung

Die Anmeldung betrifft eine Rübenerntemaschine mit in Fahrtrichtung frontseitig angebauter Rübenköpf- und Rodeeinheit.

Grundsätzlich unterscheidet man in der Rübenerntetechnik zwischen den ein- und zweiphasigen Ernteverfahren. Während beim einphasigen Ernteverfahren in einem Arbeitsgang die Rüben geköpft, gerodet, gereinigt und nach eventuellem Zwischenbunkern auf ein Transportfahrzeug übergeladen werden, wird im zweiphasigen Ernteverfahren in der ersten Phase nur geköpft und gerodet, teilweise auch gereinigt, und die gerodeten Rüben werden dann jedoch auf dem Acker abgelegt. Erst in der zweiten Phase nimmt eine Erntemaschine die abgelegten Rüben auf, reinigt sie eventuell nach und lädt sie auf ein Transportfahrzeug.

Maßgeblich für die Auslegung der Rübenerntemaschinen ist der Zustand, in dem sich die zu erntenden Rüben auf den Äckern befinden. Für die Aussaat der Rüben wird heute eine Sätechnik eingesetzt, die die gesetzlich zulässige Arbeitsbreite für Straßenfahrt von 3 m ausnutzt. Auf einer Breite von 3 m können sechs Reihen von Rüben ausgesät werden. Um dem Verlauf der Rübenreihen bei der Ernte folgen zu können, ohne Ernteverluste wegen Abweichungen von nebeneinanderliegenden Drillspuren zu erleiden, verfügen die heute bekannten Rübenerntemaschinen über Einrichtungen, mit denen 1, 2, 3 oder 6 Reihen von Rüben geerntet werden können. Dadurch ist sichergestellt, daß man innerhalb einer sechsreihigen Drillspur ernten kann. Aus dem Stand der Technik ist jedoch weder für das einphasige noch für das zweiphasige Ernteverfahren eine Technik bekannt, mit der in mehr als sechs Reihen Rüben geerntet werden können.

Neben der Schwierigkeit, Abweichungen von nebeneinanderliegenden Drillspuren auszugleichen, besteht eine weitere Schwierigkeit bei der Ernte von mehr als sechs Reihen darin, die anfallenden Gutmengen von Rüben und geköpften Blättern zu beherrschen. Die Ablage eines Schwads zwischen den Reifen einer Erntemaschine ist bei der Ernte von mehr als sechs Reihen nicht mehr ohne weiteres möglich, da die abgelegten Blätter in den Boden gedrückt werden und nicht mehr genügend verteilt werden können und abgelegte Rüben von den Rädern beschädigt werden, was nicht akzeptable Erntegutverluste zur Folge hätte. Auch ist der Bauraum zwischen den beiden Vorderrädern zu klein, um im einphasigen Verfahren die anfallende Menge an Rüben vom Köpf- und Rodevorsatz zu den Reinigungseinrichtungen zu fördern.

Ein weiteres Problem besteht darin, die Köpf- und Rodeeinheit bei der Ernte von mehreren Reihen kontinuierlich so dicht am Boden zu führen, daß einerseits die Blätter zuverlässig abgetrennt und jede einzelne Rübe sicher gerodet wird. Je mehr Reihen in einem Arbeitsgang abgeerntet werden, umso größer wird das Risiko bei unebenen Bodenoberflächen, daß einzelne Reihen schlecht geköpft und/oder gerodet werden.

Es ist Aufgabe der vorliegenden Erfindung, eine Rübenerntemaschine vorzuschlagen, die mehr als sechs Reihen von Rüben ernten kann.

Die Aufgabe wird durch eine Rübenerntemaschine nach den Ansprüchen 1 und 2 gelöst.

Weitere vorteilhafte Ausgestaltungen ergeben sich aus den Merkmalen der Unteransprüche.

Die vorgeschlagene Anordnung von mindestens zwei zueinander beweglich gelagerten Rübenköpf- und Rodelementen erlaubt zum einen eine bessere Bodenanpassung der Arbeitsorgane beim Köpfen und Roden. Zudem ist es bei der elementweisen Anordnung einfacher, die anfallenden Gutströme zu beherrschen, da sie sich leichter aufteilen und lenken lassen als ein großer Gutstrom aus einem einzigen Rübenköpf- und Rodelement. Zudem können die einzelnen Rübenköpf- und Rodelemente nach dem Baukastenprinzip sowohl in herkömmlicher Weise als Einzelelement für die Ernte von bis zu 6 Reihen Rüben genutzt als auch als Teilelement in Vorsätzen für die Ernte von mehr als 6 Reihen eingesetzt werden, was die Herstellkosten senkt und auch die Wartung und Ersatzteilversorgung vereinfacht. Wenn zumindest eine der Rübenköpf- und Rodeelemente auf die Ernte von 6 Reihen Rüben ausgelegt ist, kann der Fahrer der Rübenerntemaschine entlang einer 6-reihigen Drillspur steuern. In diesem Fall wäre dann nur die Anpassung der oder des weiteren Rübenköpf- und Rodeelemente an die weitere nebenliegende Drillspur erforderlich, was den Steuerungs- und Regelungsaufwand vermindert.

Im folgenden wird die Erfindung anhand von Ausführungsbeispielen erläutert. Es zeigen:
- Figur 1: ein Trägerfahrzeug mit in Fahrtrichtung frontseitig angebauter Rübenköpf-und Rodeeinheit in der Seitenansicht,
- Figur 2: eine in Figur 1 gezeigte Rübenerntemaschine von oben,
- Figur 3: eine Abwandlung der gezeigten Rübenerntemaschine für das einphasige Rübenernteverfahren,
- Figur 4: eine abgewandelte Ausführung der Rübenköpf- und Rodeelemente,
- Figur 5: eine Ansicht von vorn der in Figur 4 gezeigten Rübenköpf- und Rodeelemente.
- Figur 6: eine Ansicht einer Rübenerntemaschine von oben, bei der die Rübenköpf- und Rodeelemente jeweils einen eigenen Rahmen aufweisen.

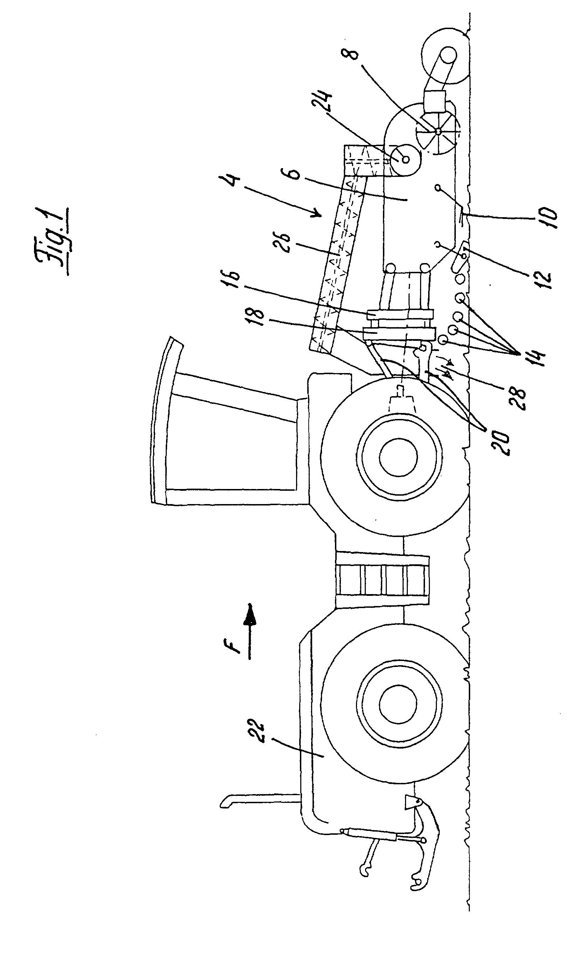

In Figur 1 ist eine Rübenerntemaschine 2 in der Seitenansicht zu sehen. Während der Erntearbeit bewegt sich die Rübenerntemaschine in Fahrtrichtung F. Die Rübenköpf- und Rodeeinheit 4 weist die eigentliche Rübenköpf- und Rodevorrichtung 6 mit den einzelnen Bearbeitungswerkzeugen auf. Der Schlegler 8 köpft das Rübenblatt, die Köpfmesser 10 köpfen die Rübe und die Rodeschare 12 heben die Rüben aus dem Boden. Es schließt sich eine Reinigung über die Wendelwalzen 14 an. Die Rodeeinheit 4 weist einen Hilfsrahmen 16 auf, der am Hauptrahmen 18 befestigt ist. Der Hauptrahmen 18 ist wiederum über ein Gestänge 20, beispielsweise eine Dreipunktaufhängung, mit dem Rahmen der Rübenerntemaschine 2 verbunden. Im in Figur 1 gezeigten Ausführungsbeispiel wird die Rübenköpfund Rodeeinheit 4 von einem Trägerfahrzeug 22 bewegt. Dem Fachmann ist es jedoch ohne weitere Überlegungen erkennbar, daß die vorgeschlagene Lösung auch an einem Traktor oder einer selbstfahrenden Rübenerntemaschine wie einem Köpfrodebunker anwendbar ist.

Die von den Wendelwalzen 14 gereinigten Rüben können, je nachdem, ob nach dem einoder zweiphasigen Rübenernteverfahren geerntet wird, entweder auf dem Acker abgelegt oder an eine nachgeschaltete Reinigung abgegeben werden. Im Ausführungsbeispiel werden die Rüben auf dem Acker abgelegt. Die abgeschnittenen Blattbestandteile der Rübe werden von der Krautschnecke 24 in einen Krautsammler 26 gefördert, der die Blattbestandteile von der gesamten Rübenköpf- und Rodeeinheit 4 sammelt, über sie hinwegfördert und durch die Austrittsöffnung 28 auf dem Acker im Schwad ablegt.

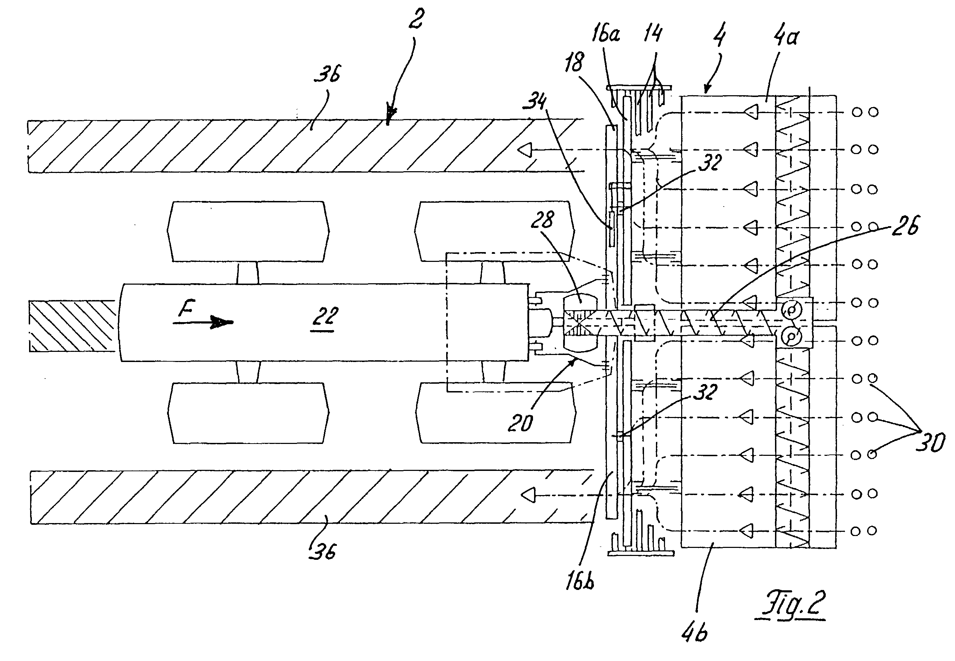

Figur 2 zeigt die in Figur 1 dargestellte Rübenerntemaschine 2 in einer Ansicht von oben. Gut erkennbar sind die Rübenreihen 30. Die Rübenköpf- und Rodeeinheit 4 besteht aus zwei Rübenköpf- und Rodeelementen 4a und 4b. Der Hauptrahmen 18 der Rübenköpf- und Rodeeinheit 4 ist mit dem Trägerfahrzeug 22 über das Gestänge 20 verbunden. Am Hauptrahmen 18 sind die Hilfsrahmen 16 a und 16 b befestigt, die wiederum die Rübenköpf- und Rodeelemente 4a, 4b tragen. Die Koppelstellen 32 verbinden den Hauptrahmen 18 mit den Hilfsrahmen 16 a, 16 b so, daß die Hilfsrahmen um eine sich im wesentlichen in Fahrtrichtung erstreckende horizontale Achse drehbar sind. Die Verdrehung in den Koppelstellen 32 erlaubt den Rübenköpf- und Rodeelementen 4a, 4b eine leichte Anpassung an die jeweilige Bodenkontur. Das Rübenköpf- und Rodeelement 4a ist mittels eines Hydraulikzylinders 34 auf einer Lagerschiene querverschieblich gelagert. Bei wechselnden Distanzen zwischen den jeweiligen Drillspuren können die Rübenköpf- und Rodeelemente 4 a, 4 b an die jeweils vorgefundenen Distanzen angepaßt werden. Die Verstellung kann manuell oder anhand der Signale von geeigneten Sensoren, beispielsweise Tastern, automatisiert erfolgen.

Wie zudem erkennbar ist, fördert der Krautsammler 26 die Blattbestandteile zur Austrittsöffnung 28, die etwa mittig zur Längsmittelachse des Trägerfahrzeugs 22 die Blattbestandteile im Schwad auf den Boden fallen läßt. Das Schwad, bestehend aus den Blattbestandteilen, bildet sich so mittig zwischen den Reifen der Rübenerntemaschine. Die gereinigten Rüben werden durch eine geeignete Wendelung der Wendelwalzen 14 in zwei Schwaden 36 ausgeworfen, die an hinteren seitlichen Öffnungen der Rübenköpf- und Rodeeinheit 4 ausgefördert werden. Die fertigen Schwaden 36 liegen so seitlich der Radspur des Trägerfahrzeugs 22. Mit dem Ernten der nächsten Reihe entsteht dann ein Doppelschwad, das beim zweiphasigen Ernteverfahren leicht in einem Arbeitsgang von einem nachfolgenden Reinigungslader aufgenommen werden kann.

Im Ausführungsbeispiel sind die Rübenköpf- und Rodeelemente 4a, 4b in einer Kombination 6+6 gezeigt, sodaß die gezeigte Vorrichtung insgesamt 12 Reihen Rüben 30 in einem Arbeitsgang köpfen und roden kann. Es ist jedoch auch denkbar, anstelle der Kombination 6+6 Kombinationen von 3+3+3, 6+6+6, 3+3+3+3 oder 6+3, 6+3+3, 3+6+3, 6+6+3, oder 2+2+2+3 oder sonstige Kombinationen zu realisieren. Die Kombination sollte so gewählt werden, daß eine einfache Anpassung an die Bodenverhältnisse erfolgen kann und zudem bei mindestens zwei Arbeitsgängen möglichst eine ganzzahlige Zahl von Drillspuren geerntet wird.

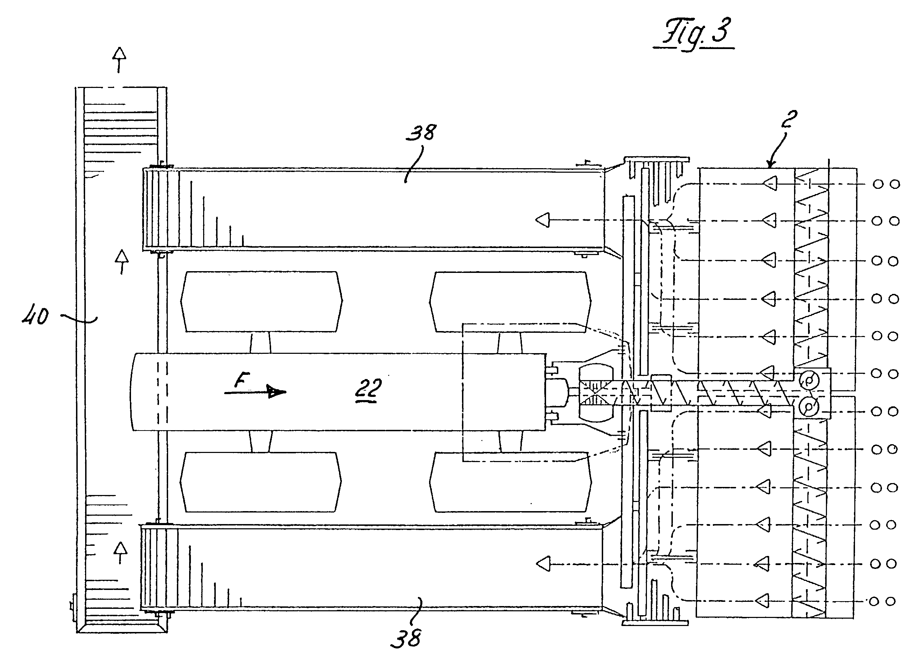

In Figur 3 ist eine Rübenerntemaschine gezeigt, deren Rübenköpf- und Rodeeinheit 4 im wesentlichen der in Figur 2 gezeigten Ausführung entspricht. Die gereinigten Rüben werden von den Wendelwalzen 14 nicht auf dem Acker, sondern auf zwei seitlich zur Kabine angeordnete Endlosförderer 38 abgelegt. In bevorzugter Ausgestaltung handelt es sich bei den Endlosförderern 38 um Siebbänder, durch die Verschmutzungen, die sich während des Transports der Rüben von diesen lösen können, nach unten herabfallen. Die Endlosbänder 38 haben damit eine Reinigungsfunktion. Die Endlosförderer 38 sind im Ausführungsbeispiel neben den Rädern dargestellt, es ist jedoch auch möglich, diese über den Rädern anzuordnen, um trotz mit den Abmessungen der Maschine innerhalb der zulässigen Grenzen zu bleiben. Die Endlosbänder 38 können insbesondere bei selbstfahrenden Köpfrodebunkern mit nachoder zwischengeordneten Siebsternen oder anderen geeigneten Reinigungselementen kombiniert werden, um die Reinigungswirkung zu erhöhen. Im Ausführungsbeispiel ist ein quer zur Fahrtrichtung F liegendes Förderband 40 gezeigt, das die Rüben auf ein nicht näher dargestelltes nebenherfahrendes Transportfahrzeug überladen soll. Auf diese Weise ist die vorgeschlagene Erfindung auch in Rübenerntemaschinen anwendbar, die einphasig arbeiten.

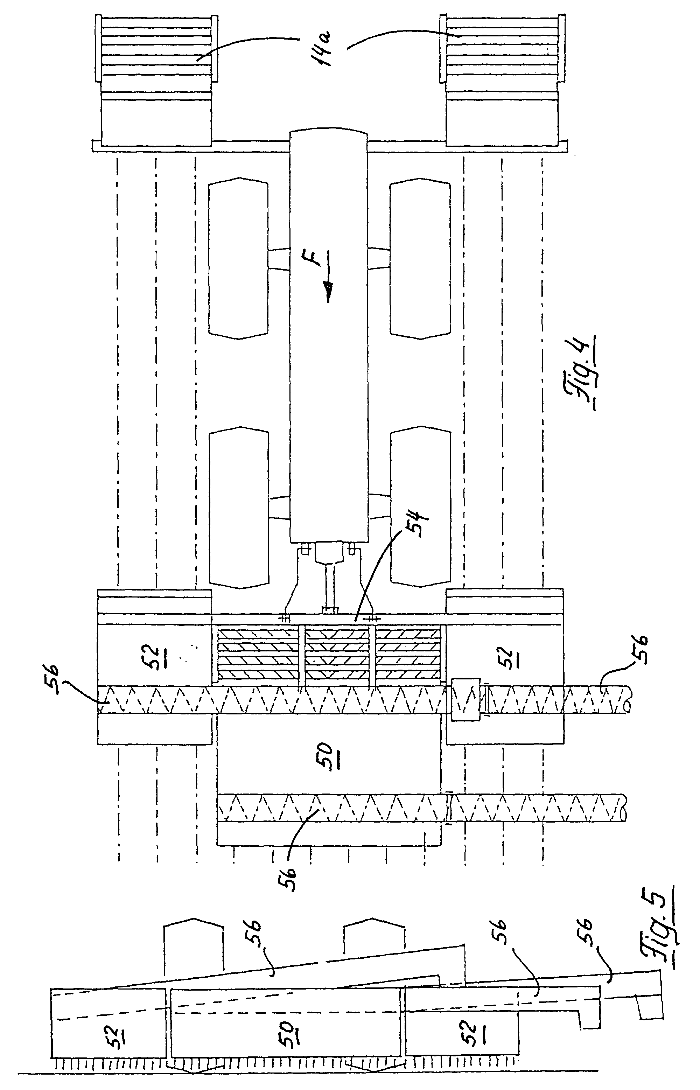

In Figur 4 ist eine Abwandlung der vorgeschlagenen Lösung gezeigt, die eine einfachere Umrüstung der Rübenerntemaschine 2 auf die für den Straßenverkahr zugelassenen Fahrzeugbreiten erlaubt. Die frontseitige Kombination der Rübenköpf- und Rodeeinheit besteht aus einer Kombination von 3+6+3 reihig erntenden Rübenköpf- und Rodeelementen 50, 52. Mittig ist ein Rübenköpf- und Rodeelement 50 angeordnet, das auf herkömmliche Art sechsreihig arbeitet. Die gerodeten Rüben werden von Wendelwalzen 14 mittig zwischen den Rädern abgelegt. Seitlich neben der Rübenköpf- und Rodeelement 50 sind zwei dreireihig arbeitende Rübenköpf- und Rodeelemente 52 angeordnet, die die gerodeten Rüben auf dem Feld ablegen. Die den Rübenköpf- und Rodeelementen 52 zugehörigen Wendelwalzen 14a sind jedoch in einer getrennten Baugruppe angeordnet, die mit motorischen Stellmitteln oder manuell aus einer horizontalen in eine im wesentlichen vertikale Lage verschwenkbar seitlich hinter der Rübenerntemaschine 2 angeordnet sind. Da auch die Rübenköpf- und Rodeelemente 52 mit motorischen Stellmitteln 54 aus einer im wesentlichen horizontalen in eine im wesentlichen vertikale Lage verschwenkbar sind, kann die Fahrzeugbreite der Rübenerntemaschine 2 schnell und einfach verringert werden. Anstelle der Wendelwalzen 14a können auch Siebsterne oder eine sonstige einzelnen oder Kombinationen von an sich bekannten Reinigungsmitteln eingesetzt werden. Besonders hervorzuheben ist, daß die Wendelwalzen 14a die gereinigten Rüben auf das sich zwischen den Rädern befindende Schwad von Rüben aus der Rübenköpf- und Rodevorrichtung 50 abgeben, sodaß sich ein Rübenschwad aus im Ausfiihrungsbeispiel 12 geerneteten Rübenreihen 30 ergibt.

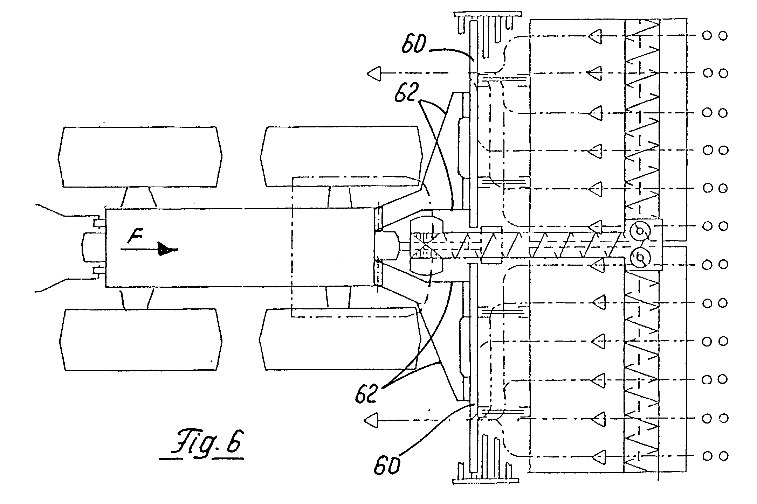

Die von den Rübenköpf- und Rodeelementen 50, 52 abgetrennten Blattbestandteile werden von Fördermitteln 56 zur seitlichen Ablage quer über die Rübenköpf- und Rodeelemente 50, 52 hinweggefördert, um eine Vermischung der gereinigten Rüben mit den Blattbestandteilen zu vermeiden. Dabei ist es vorteilhaft, wenn die überstehenden Enden der Fördermittel 56 unterschiedlich lang sind, um eine bessere Querverteilung der Blattbestandteile zu erreichen. In Figur 5 ist eine schematische Ansicht der in Figur 4 gezeigten Rübenerntemaschine 2 von vorn gezeigt. Es ist gut erkennbar, wie die Fördermittel 56 seitlich über die Rübenköpf- und Rodeelemente 50, 52 hinausragen.

In Figur 6 ist ein Ausführungsbeispiel gezeigt, wie frontseitig zwei Rübenköpf- und Rodeelemente 4a, 4b in jeweils einem eigenen Rahmen 60 unabhängig beweglich voneinander angeordnet sind. Jeder der Rahmen 60 ist über ein Gestänge 62, das auch aus einer jeweils eigenen Dreipunktaufhängung bestehen kann, mit der Rübenerntemaschine 2 verbunden.

Die vorstehenden gegenständlichen Beschreibungen dienen lediglich der Erläuterung der vorliegenden Erfindung. Sie sind keineswegs einschränkend zu verstehen. Dem Fachmann bereitet es keinerlei Schwierigkeiten, die vorgeschlagenen Lösungselemente mit anderen vorgeschlagenen Lösungselementen oder anderen an sich aus dem Stand der Technik bekannten Lösungsmitteln zu kombinieren oder für seine Zwecke abzuwandeln.

## Patentansprüche

1. Rübenerntemaschine mit in Fahrtrichtung frontseitig angebauter Rübenköpf- und Rodeeinheit,
**dadurch gekennzeichnet,**
**dass** die Rübenköpf- und Rodeeinheit (4) auf die Ernte von mehr als sechs Reihen Rüben (30) ausgelegt ist und aus einem in einer Aufhängung gelagerten Hauptrahmen (18) besteht, in dem zumindest zwei voneinander unabhängig beweglich gelagerten Rübenköpf- und Rodeelemente (4a, 4b) angeordnet sind und zumindest eines der Rübenköpf- und Rodeelemente (4a. 4b) zur Bodenanpassung der Arbeitsorgane beim Köpfen und Roden quer zur Fahrtrichtung (F) beweglich ist.

2. Rübenerntemaschine mit in Fahrtrichtung frontseitig angebauter Rübenköpf- und Rodeeinheit,
**dadurch gekennzeichnet,**
**dass** die Rübenköpf- und Rodeeinheit (4) auf die Ernte von mehr als sechs Reihen Rüben (30) ausgelegt ist und zumindest zwei Rübenköpf- und Rodeelemente (4a, 4b) in jeweils einem eigenen Rahmen (60) unabhängig beweglich voneinander angeordnet sind und zumindest eines der Rübenköpf- und Rodeelemente (4a. 4b) zur Bodenanpassung der Arbeitsorgane beim Köpfen und Roden quer zur Fahrtrichtung (F) beweglich ist.

3. Rübenerntemaschine nach Anspruch 1 oder 2,
**dadurch gekennzeichnet,**
**daß** mindestens eine der Rübenköpf- und Rodeeinheiten (4a, 4b) auf die Ernte von sechs Reihen Rüben ausgelegt ist.

4. Rübenerntemaschine nach einem oder mehreren der Ansprüche 1 bis 4,
**dadurch gekennzeichnet,**
**daß** die Rübenköpf- und Rodelemente (4 a, 4 b) um ihre Längsachse in Fahrtrichtung drehbar gelagert sind.

5. Rübenerntemaschine nach einem oder mehreren der vorstehenden Ansprüche,
**dadurch gekennzeichnet,**
**daß** die Rahmen (18) und/oder die Hilfsrahmen (16 a, 16 b) lösbar mit der Rübenerntemaschine (2) verbunden sind.

6. Rübenerntemaschine nach einem oder mehreren der vorstehenden Ansprüche,
**dadurch gekennzeichnet,**
**daß** die Rübenerntemaschine (2) zwei seitliche Schwaden (36) von gerodeten Rüben auf den Acker ablegt.

7. Rübenerntemaschine nach einem oder mehreren der vorstehenden Ansprüche,
**dadurch gekennzeichnet,**
**daß** die Rübenerntemaschine ein mittig in Maschinenlängsachse befindliches Schwad aus Rüben bildet, wobei ein Teil der Rüben erst nach Vorbeifährt der Erntemaschine (2) an dem ersten Teil des Schwads auf dem Schwad abgelegt wird.

8. Rübenerntemaschine nach einem oder mehreren der vorstehenden Ansprüche,
**dadurch gekennzeichnet,**
**daß** die Rübenerntemaschine (2) ein Schwad aus Blattbestandteilen bildet.

9. Rübenerntemaschine nach einem oder mehreren der vorstehenden Ansprüche,
**dadurch gekennzeichnet,**
**daß** die Rübenköpf- und Rodeeinheit (4) die gerodeten Rüben auf zumindest 2 seitlich an der Fährerkabine entlangführende Endlosförderer (38) ablegt.

10. Rübenerntemaschine nach einem oder mehreren der vorstehenden Ansprüche,
**dadurch gekennzeichnet,**
**daß** eines oder mehrere der Rübenköpf- und Rodeleemente (4a, 4b, 50, 52) und/oder der Reinigungseinrichtungen (14, 14 a) um eine horizontale, sich im wesentlichen in Fahrrichtung erstreckende Achse von einer im wesentlichen horizontalen in eine im wesentlichen vertikale Stellung verschwenkbar sind.

## Claims

1. A beet harvesting machine with a beet topping and lifting unit which is mounted at the front end in the direction of travel **characterised in that** the beet topping and lifting unit (4) is designed for harvesting more than six rows of beets (30) and comprises a main frame (18) which is supported in a suspension means and in which at least two mutually independently movably supported beet topping and lifting elements (4a, 4b) are arranged and at least one of the beet topping and lifting elements (4a, 4b) is movable transversely with respect to the direction of travel (F) for adaptation of the working members to the ground in the topping and lifting operation.

2. A beet harvesting machine with a beet topping and lifting unit which is mounted at the front end in the direction of travel **characterised in that** the beet topping and lifting unit (4) is designed for harvesting more than six rows of beets (30) and at least two beet topping and lifting elements (4a, 4b) are arranged movably independently of each other in their own respective frame (60) and at least one of the beet topping and lifting elements (4a, 4b) is movable transversely with respect to the direction of travel (F) for adaptation of the working members to the ground in the topping and lifting operation.

3. A beet harvesting machine according to claim 1 or claim 2 **characterised in that** at least one of the beet topping and lifting units (4a, 4b) is designed for harvesting six rows of beets.

4. A beet harvesting machine according to one or more of claims 1 to 3 **characterised in that** the beet topping and lifting elements (4a, 4b) are supported rotatably about their longitudinal axis in the direction of travel.

5. A beet harvesting machine according to one or more of the preceding claims **characterised in that** the frames (18) and/or the auxiliary frames (16a, 16b) are connected releasably to the beet harvesting machine (12).

6. A beet harvesting machine according to one or more of the preceding claims **characterised in that** the beet harvesting machine (2) deposits two lateral swathes (36) of lifted beets on the field.

7. A beet harvesting machine according to one or more of the preceding claims **characterised in that** the beet harvesting machine forms a swathe of beets, which is disposed centrally on the longitudinal axis of the machine, wherein a part of the beets is deposited on the swathe only after the harvesting machine (2) has moved past the first part of the swathe.

8. A beet harvesting machine according to one or more of the preceding claims **characterised in that** beet harvesting machine (2) forms a swathe of leaf constituents.

9. A beet harvesting machine according to one or more of the preceding claims **characterised in that** the beet topping and lifting unit (4) deposits the lifted beets on at least two endless conveyors (38) which pass laterally along the driving cabin.

10. A beet harvesting machine according to one or more of the preceding claims **characterised in that** one or more of the beet topping and lifting elements (4a, 4b, 50, 52) and/or the cleaning devices (14, 14a) are pivotable about a horizontal axis extending substantially in the direction of travel from a substantially horizontal into a substantial vertical position.

## Revendications

1. Récolteuse de betteraves avec une unité décolleteuse-arracheuse pour betteraves montée côté frontal, dans la direction de déplacement, **caractérisée en ce que** l'unité décolleteuse-arracheuse (4) est agencée pour la récolte d'un nombre de rangs de betteraves (30) supérieur à six et comprend un chassis principal (18) monté sur un support, sur lequel sont disposés au moins deux éléments décolleteurs-arracheurs (4a, 4b) mobiles indépendamment l'un de l'autre et **en ce qu'**au moins l'un des éléments décolleteurs-arracheurs (4a, 4b) est mobile transversalement à la direction de déplacement (F) à des fins d'adaptation au sol des organes de travail pour le décolletage et l'arrachage.

2. Récolteuse de betteraves avec une unité décolleteuse-arracheuse pour betteraves montée côté frontal, dans la direction de déplacement, **caractérisée en ce que** l'unité décolleteuse-arracheuse (4) est agencée pour la récolte d'un nombre de rangs de betteraves (30) supérieur à six et **en ce qu'**au moins deux éléments décolleteurs-arracheurs (4a, 4b) sont disposés chacun sur un chassis (60) propre, avec possibilité de déplacmeent indépendamment l'un de l'autre, et **en ce qu'**au moins l'un des éléments décolleteurs-arracheurs (4a, 4b) est mobile transversalement à la direction de déplacement (F) à des fins d'adaptation au sol des organes de travail pour le décolletage et l'arrachage.

3. Récolteuse de betteraves selon la revendication 1 ou 2, **caractérisée en ce qu'**au moins une des unités décolleteuses-arracheuses (4a, 4b) est agencée pour la récolte de six rangs de betteraves.

4. Récolteuse de betteraves selon une des revendications 1 à 3, **caractérisée en ce que** les éléments décolleteurs-arracheurs (4a, 4b) sont montés avec possibilité de rotation autour de leur axe longitudinal dans la direction de déplacement.

5. Récolteuse de betteraves selon une ou plusieurs des revendications précédentes, **caractérisée en ce que** les chassis (18) et/ou les chassis auxiliaires (16a, 16b) sont liés de manière démontable à la récolteuse de betteraves (2).

6. Récolteuse de betteraves selon une ou plusieurs des revendications précédentes, **caractérisée en ce que** la récolteuse de betteraves (2) dépose sur le champ deux andains (36) latéraux de betteraves arrachées.

7. Récolteuse de betteraves selon une ou plusieurs des revendications précédentes, **caractérisée en ce que** la récolteuse de betteraves (2) forme un andain de betteraves disposé au milieu sur l'axe longitudinal de la machine, une partie des betteraves étant déposées sur l'andain seulement après le passage de la machine (2) au-dessus de la première partie dudit andain.

8. Récolteuse de betteraves selon une ou plusieurs des revendications précédentes, **caractérisée en ce que** la récolteuse de betteraves (2) forme un andain d'éléments foliaires.

9. Récolteuse de betteraves selon une ou plusieurs des revendications précédentes, **caractérisée en ce que** l'unité récolteuse-arracheuse (4) dépose les betteraves arrachées sur au moins deux bandes transporteuses sans fin, qui s'étendent sur le côté, le long de la cabine du conducteur.

10. Récolteuse de betteraves selon une ou plusieurs des revendications précédentes, **caractérisée en ce qu'**un ou plusieurs des éléments décolleteurs-arrcheurs (4a, 4b, 50, 52) et/ou les dispositifs de nettoyage (14, 14a) peuvent pivoter autour d'un axe horizontal qui s'étend essentiellement dans la direction de déplacement d'une position essentiellement horizontale dans une position essentiellement verticale.
